# NEUE EUROPÄISCHE PATENTSCHRIFT

(11) **EP 2 117 895 B2**
(45) Veröffentlichungstag und Bekanntmachung des Hinweises auf die Entscheidung über den Einspruch: **26.02.2014**
(45) Hinweis auf die Patenterteilung: 09.06.2010
(21) Anmeldenummer: 07819741.5
(22) Anmeldetag: 10.11.2007
(51) Int. Cl.: B60T 13/38, B60T 13/26, B60T 7/10, B60T 7/12, B60T 17/18

(54) **VERFAHREN UND EINRICHTUNGEN ZUM BETREIBEN EINER KRAFTFAHRZEUGBREMSEINRICHTUNG**
METHOD AND DEVICES FOR OPERATING A MOTOR VEHICLE BRAKE DEVICE
PROCÉDÉ ET DISPOSITIFS POUR EXPLOITER UN SYSTÈME DE FREINAGE DE VÉHICULE AUTOMOBILE

(30) Priorität: 11.01.2007 DE 102007001708
(43) Veröffentlichungstag der Anmeldung: 18.11.2009
(73) Patentinhaber: WABCO GmbH, 30453 Hannover (DE)
(72) Erfinder: BENSCH, Uwe, 30161 Hannover (DE); FÖRSTER, Henning, 31171 Nordstemmen (DE); HELMER, Jörg, 88267 Vogt (DE); ROSENDAHL, Hartmut, 30167 Hannover (DE); SCHLOTTMANN, Marcel, 30989 Gehrden (DE); STRUWE, Otmar, 30163 Hannover (DE)
(86) Internationale Anmeldenummer: PCT/EP2007/009749
(87) Internationale Veröffentlichungsnummer: WO 2008/083784

(56) Entgegenhaltungen:
- EP-A- 0 687 604
- EP-B- 0 976 628
- DE-A1- 10 336 611
- DE-A1- 19 510 796
- JP-A- 2 114 046

## Beschreibung

Die Erfindung betrifft ein Verfahren zum Betreiben einer Bremseinrichtung eines Fahrzeuges mit einer Betriebsbremse und einer Feststellbremse nach dem Oberbegriff von Anspruch 1 sowie eine entsprechende Einrichtung nach dem Oberbegriff von Anspruch 7.

Derartige Bremseinrichtungen werden in Kraftfahrzeugen mit elektronischen Bremssystemen eingesetzt. Diese Bremssysteme weisen regelmäßig eine Betriebsbremse und eine Feststellbremse auf. Die Betriebsbremse wird während des Fahrbetriebs des Fahrzeugs benutzt. Sie dient dazu, das Fahrzeug im Betrieb abzubremsen oder aber auch kurzfristig das Fahrzeug in einer stehenden Position, bspw. an einer Ampel, einer Bushaltestelle oder während eines Anfahrens am Berg zu halten.

Ferner weist ein derartiges Bremssystem eine sog. Feststellbremse auf. Sie wird dazu verwendet, ein abgestelltes Fahrzeug langfristig am Wegrollen zu hindern.

Das Fahrzeug weist zur Umsetzung einer Feststellbremse regelmäßig kombinierte Federspeicher-/Membranbremszylinder auf. Derartige Bremszylinder weisen neben der Funktion von Membranbremszylindern zusätzlich eine Federspeicherfunktion auf. Diese Bremszylinder umfassen je einen Membranteil und einen Federspeicherteil. Der Membranteil ist pneumatisch mit der Betriebsbremsanlage verbunden und mit dem eigentlichen Betriebsbremsdruck beaufschlagbar. Der Federspeicherteil ist pneumatisch von dem Membranteil getrennt und über gesonderte Druckluftleitungen mit Druckluft beaufschlagbar.

Der Federspeicherteil setzt die Federspeicherfunktion um, indem bei Druckluftbeaufschlagung des Federspeicherteils eine Speicherfeder vorgespannt und dabei eine Bremswirkung der Speicherfeder verringert wird. Bei einer Entlüftung des Federspeicherteils entspannt sich die Speicherfeder, so dass eine Bremswirkung im Rahmen der Federspeicherfunktion auf die mit dem jeweiligen Bremszylinder verbundene Bremse ausgeübt wird. Bremszylinder dieses Typs werden nachfolgend als Federspeicherbremszylinder bezeichnet. Mittels solcher Federspeicherbremszylinder wird die Feststellbremse implementiert, die auch bei Fehlen von Druckluft ein Feststellen bzw. Bremsen des Fahrzeugs ermöglicht.

Eine Funktion, welche mit einer Betriebsbremse und einer Feststellbremse im Zusammenhang mit einem elektronischen Bremssystem realisiert werden kann, ist das Halten des Bremsdruckes bei angehaltenem Fahrzeug. Der Fahrer kann bei angehaltenem Fahrzeug den Fuß vom Bremspedal nehmen, ohne dass die Betriebsbremse gelöst wird und das Fahrzeug wegrollt. Hierzu ist jedoch zuvor eine entsprechende Rollbremsfunktion - auch Rollsperre genannt - zu aktivieren bzw. ein Bedienelement zu betätigen, welches die Rollbremsfunktion aktiviert.

Nach einer derartigen Aktivierung und nach Erreichen des Fahrzeugstillstandes wird der ausgesteuerte Druck der Betriebsbremse eingesperrt, so dass der zuletzt ausgesteuerte Bremsdruck gehalten wird. Diese Funktion wird als "Hillholder-Funktion" bezeichnet. Der Fahrer kann sich somit beim Anfahren auf den reinen Anfahrvorgang konzentrieren, was den Anfahrvorgang für den Fahrer spürbar erleichtert.

Eine ähnliche Ausprägung der Rollbremsfunktion stellt die sog. "Haltestellenbremse" dar, die für den Einsatz von Bussen vorgesehen ist und an Bushaltestellen aktiviert werden kann. Durch Betätigen eines entsprechenden Schalters wird ein vorbestimmter, parametrisierbarer Druck im Bremssystem ausgesteuert, der das Fahrzeug halten soll. Im Gegensatz zu diesem vorbestimmten, parametrisierbaren Druck, der bei Betätigung des Schalters ausgesteuert wird, wird bei der zuvor beschriebenen Hillholder-Funktion der beim Anhalten des Fahrzeugs ausgesteuerte Bremsdruck gehalten, der je nach Fahrsituation variieren kann.

Diese bekannte Rollbremsfunktion erfolgt über die Betriebsbremse. Nachteilig an dieser bekannten Lösung ist, dass das Fahrzeug wegrollt, wenn der Betriebbremsdruck nachlässt, bspw. durch eine Störung der elektrischen Energieversorgung, durch einen Druckabfall oder durch einen Fehler im elektronischen Bremssystem.

Der Fahrer darf während einer aktivierten Rollbremsfunktion den Fahrersitz nicht verlassen, um bei einem unbeabsichtigten Lösen der Rollbremsfunktion oder einem Nachlassen des Bremsdruckes im Betriebsbremskreis unmittelbar eingreifen zu können. Die Rollbremsfunktion stellt nämlich keine sichere Feststellbremse bereit. Vielmehr ist damit zu rechnen, dass das Fahrzeug bspw. bei einem Absterben des Motors oder einem Ausfall der elektrischen Energieversorgung sich selbsttätig in Bewegung setzt.

Gelegentlich verwendet jedoch ein Fahrer die Betriebsbremse anstelle der Feststellbremse, um das Fahrzeug längerfristig abzustellen. Dies entspricht jedoch nicht der bestimmungsgemäßen Verwendung der Betriebsbremse. Das Fahrzeug kann nämlich wegrollen, wenn der Betriebsbremsdruck nachlässt.

Im Stand der Technik wurden verschiedene Lösungsvorschläge unterbreitet, um die Sicherheit derartiger Systeme zu erhöhen.

Bei bekannten Systemen ist bspw. eine Sicherheitsabfrage vorgesehen, die feststellt, falls der Fahrer den Fahrersitz verlässt. Sobald der Fahrer seinen Sitz verlässt, wird - bei aktivierter Rollbremsfunktion - ein Warnsignal ausgegeben und die Rollsperre gelöst. Hierdurch wird der Fahrer gewarnt und gezwungen, seinen Sitz nicht zu verlassen und unmittelbar wieder das Bremspedal zu betätigen.

DE 103 36 611 A1 sieht bspw. vor, bei Auftreten eines Defekts in der Bremsanlage bei aktivierter Rollbrems-Funktion die Feststellbremse zu aktivieren.

Ferner sieht EP 0 976 628 B1 vor, vom Zeitpunkt eines vollzogenen, über die Betriebsbremse eingeleiteten Haltevorgangs an nach Ablauf einer ersten Verzögerungszeit ein akustisches Signal auszulösen, falls der Haltezustand ausschließlich über die Betriebsbremse gehalten wird. Nach Ablauf einer weiteren, sich an die erste Verzögerungszeit anschließenden zweiten Verzögerungszeit EP 0 687 604 A2 beschreibt ein Betriebsverfahren, wo die Fahrpedalstellung einer der Eingangsparameter ist. erfolgt dann eine automatische Generierung der Feststellbremse, falls bis dahin das Fahrzeug über die Betriebsbremse im Stillstand verblieben ist.

Viele der bekannten Systeme weisen jedoch weiterhin Sicherheitslücken auf. Der Erfindung liegt daher das Problem zugrunde, die Sicherheit von Rollsperren zu erhöhen.

Die Erfindung löst dieses Problem mittels eines Verfahrens gemäß Anspruch 1 sowie einer Einrichtung gemäß Anspruch 7.

Gemäß einem ersten Aspekt der Erfindung wird eine Betätigung eines Betätigungsorgans durch den Fahrer überwacht und sobald der Fahrer das Betätigungsorgan nicht mehr berührt bzw. betätigt, d.h. keinen Kontakt mehr mit dem Betätigungsorgan hält, wird die Feststellbremse automatisch eingelegt. Hiermit wird ein sehr hoher Grad an Sicherheit erreicht. Selbst wenn der Fahrer - trotz einer Absicherung des Fahrzeugs nur durch Aktivierung der Rollbremsfunktion - das Fahrzeug verlässt, werden die Federspeicher aktiviert und damit die Feststellbremse eingelegt. Somit erreicht man eine hohe Sicherheit bei Verwendung der Rollbremsfunktion.

Die Feststellbremse kann dabei unmittelbar an allen Rädern eingelegt und gleichzeitig die Betriebsbremse gelöst werden. Alternativ kann die Betriebsbremse stufenweise gelöst werden.

Bei dem zu überwachenden Betätigungsorgan handelt es sich vorzugsweise um ein im Führerhaus im Bereich des Fahrersitzes angeordnetes Pedal, beispielsweise um das Bremspedal. Bei alternativen Ausführungsformen kann es sich jedoch auch um das Kupplungspedal oder das Gaspedal handeln. Eine Überwachung des Kupplungspedals bzw. des Gaspedals hat den Vorteil, dass der Fahrer beim Anfahren nicht zunächst noch den Fuß vom Bremspedal nehmen muss, sondern unmittelbar den Anfahrvorgang durch Betätigen des Gaspedals und ggf. durch Schließen der Kupplung einleiten kann.

Bei einer weiteren Ausführungsform handelt es sich bei dem Betätigungsorgan um ein im Führerhaus angeordnetes manuelles Betätigungsorgan, wie bspw. einen Taster, insbesondere ein eine Betätigung bzw. Berührung erkennenden Sensor.

Bei einer besonderen Ausführungsform ist vorgesehen, dass zunächst nur eine erste Gruppe von Rädern, vorzugsweise die Räder der Hinterachse, welche mit Federspeicherbremszylinder ausgestattet sind, von einer Beaufschlagung mit der Betriebsbremse auf eine Beaufschlagung mit der Feststellbremse umgeschaltet werden. Dabei wird die Betriebsbremse an den entsprechenden Rädern gelöst und zugleich die Feststellbremse eingelegt. Erst nach einem zweiten, sich an den ersten Zeitabschnitt anschließenden Zeitabschnitt wird die Rollsperre vollständig deaktiviert, d.h. die Betriebsbremse auch an allen weiteren Rädern gelöst. Das Fahrzeug wird dann nur noch durch die Feststellbremse gehalten. Dies ist vorteilhaft, weil das Fahrzeug bspw. an einer Fahrbahn mit einer starken Steigung bzw. einem großen Gefälle, insbesondere bei niedrigem Reibwert der Fahrbahn, möglicherweise nicht alleine von der Feststellbremse gehalten werden kann. Durch diese Betriebsweise wird vermieden, dass sich das Fahrzeug schleichend in Bewegung setzt, weil der Fahrer auf die Absicherung der Rollsperre durch die Feststellbremse vertraut und das Fahrzeug verlässt.

Vorteilhafterweise wird kurz vor Ablauf des ersten und/oder des zweiten Zeitabschnitts ein akustisches oder optisches Warnsignal ausgegeben, welches auf die bevorstehende Änderung des Bremszustandes hinweist. Der Fahrer kann dann seine volle Aufmerksamkeit dem Zustand des Fahrzeuges widmen. D.h. er kann insbesondere darauf achten, ob sich das Fahrzeug in Bewegung setzt und ggf. die Betriebsbremse durch Treten des Bremspedals betätigen.

Gemäß einem weiteren Aspekt der Erfindung wird wiederum das Betätigungsorgan auf einen Kontakt mit dem Fahrer, insbesondere einem Pedal, wie dem Bremspedal daraufhin überwacht, ob der Fahrer Kontakt mit dem Betätigungsorgan hält. Sobald jedoch die Überwachung ergibt, dass der Fahrer keinen Kontakt mit dem Betätigungsorgan hält, insbesondere der Fuß des Fahrers keinen Kontakt mehr mit dem Pedal, beispielsweise dem Bremspedal hat, wird automatisch, d.h. mittels einer elektrischen bzw. elektronischen Steuerungseinrichtung ein von den Federspeichern erzeugbarer Bremsdruck in den Betriebsbremsteil des Bremssystems ausgesteuert. Der Fahrer kann auf diese Weise feststellen, ob das Fahrzeug überhaupt über die Feststellbremse gesichert werden kann. Wie bereits ausgeführt, besteht nämlich die Möglichkeit, dass die Bremskraft der Feststellbremse allein, bspw. bei starkem Gefälle nicht ausreicht, um das Fahrzeug zu halten. Wenn dies der Fall ist, braucht auch die Feststellbremse nicht eingelegt zu werden, da sie alleine keinen ausreichenden Schutz vor einem selbständigen Wegrollen des Fahrzeuges liefern würde. Zu diesem Zweck wird zunächst geprüft, ob der von der Feststellbremse erzeugbare Bremsdruck ausreichen würde, um das Fahrzeug zu halten. Wenn dies der Fall ist, kann dann die Feststellbremse eingelegt werden.

Gemäß einem weiteren Aspekt der Erfindung wird der Fahrzustand des Fahrzeuges überwacht, d.h. es wird überwacht, ob das Fahrzeug fährt bzw. steht. Diese Überwachung wird entweder permanent durchgeführt oder nach Aktivierung der Rollbremse und bei Erreichen des Fahrzeugstillstandes. Wenn sich dann das Fahrzeug erneut in Bewegung setzt, bedeutet dies, dass die Rollbremsfunktion versagt und daher größere Bremskräfte auf die Räder des Fahrzeuges ausgeübt werden müssen. Zu diesem Zweck werden dann alle an die Betriebsbremse angeschlossenen Räder mittels der Betriebsbremse eingebremst. Hierdurch wird auch dem Fall Rechnung getragen, dass das Fahrzeug an einer großen Steigung nicht alleine durch die Feststellbremse gehalten werden kann. Dazu wird dann zusätzlich die Betriebsbremse automatisch betätigt, d.h. die Betriebsbremsbetätigung wird von einer Steuerungseinrichtung ausgelöst.

Es wird in diesem Fall zugleich ein Warnsignal ausgegeben, das bspw. als akustisches und/oder optisches Warnsignal mittels einer Hupe und/oder eines Warnblinklichts umgesetzt werden kann.

Vorteilhafterweise erfolgt auch eine Überwachung der Bremseinrichtung und ggf. ihrer Komponenten. Falls die Überwachung ergibt, dass ein Fehler in der Bremseinrichtung und/oder in ihren Komponenten vorliegt, insbesondere ein Bremskreis ausgefallen und/oder die elektrische Energieversorgung unterbrochen ist, wird die Feststellbremse automatisch eingelegt.

Weitere Ausführungsformen ergeben sich aus den Unteransprüchen sowie aus den anhand der beigefügten Zeichnung näher erläuterten Ausführungsbeispielen. In der Zeichnung zeigt:
- Fig. 1: eine schematische Darstellung einer Einrichtung gemäß einem Aus- führungsbeispiel der Erfindung;
- Fig. 2: ein vereinfachtes Flussdiagramm zur Veranschaulichung eines ers- ten Ausführungsbeispiels eines erfindungsgemäßen Verfahrens;
- Fig. 3: ein vereinfachtes Flussdiagramm zur Veranschaulichung eines zwei- ten Ausführungsbeispiels eines erfindungsgemäßen Verfahrens;
- Fig. 4: ein vereinfachtes Flussdiagramm zur Veranschaulichung eines drit- ten Ausführungsbeispiels eines erfindungsgemäßen Verfahrens;
- Fig. 5: ein vereinfachtes Flussdiagramm zur Veranschaulichung eines vier- ten Ausführungsbeispiels eines erfindungsgemäßen Verfahrens und
- Fig. 6: ein vereinfachtes Flussdiagramm zur Veranschaulichung eines fünf- ten Ausführungsbeispiels eines erfindungsgemäßen Verfahrens.

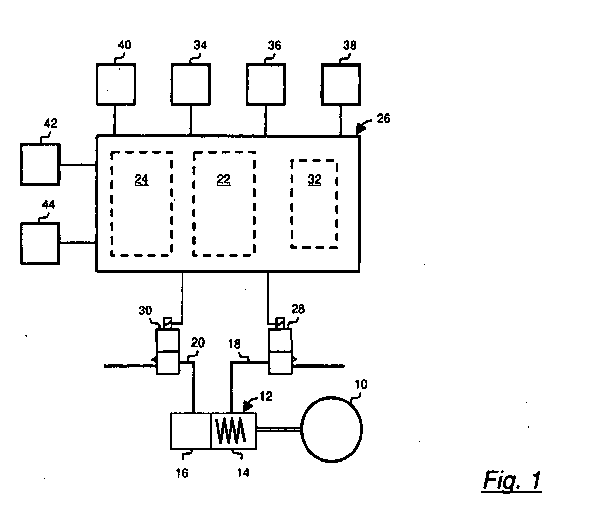

Fig. 1 zeigt schematisch eine Einrichtung zum Betreiben einer Bremseinrichtung eines Kraftfahrzeuges, insbesondere eines Nutzfahrzeuges, Lastkraftwagens oder Busses.

Das Fahrzeug weist mehrere Räder 10 auf, von denen jedoch nur eines dargestellt ist. Wenigstens ein Teil dieser Räder werden über Federspeicherbremszylinder 12 gebremst, welche wie eingangs erläutert ausgeführt sind. D.h. jeder Federspeicherbremszylinder 12 weist einen Federspeicherteil 14 für die Feststellbremse sowie ein Membranteil 16 für die Betriebsbremse auf. Um die Federspeicherbremse bzw. Feststellbremse zu lösen, muss der Federspeicherteil 14 belüftet werden. Diese Belüftung erfolgt über eine Druckluftleitung 18. Um die Feststellbremse einzulegen, muss der Federspeicherteil 14 entlüftet werden. Diese Entlüftung kann ebenfalls über die Druckluftleitung 18 erfolgen.

Mittels des Membranteils 16 wird die Betriebsbremse bereitgestellt. Wenn der Membranteil 16 belüftet wird, wird eine Bremskraft auf die dem Rad 10 zugeordneten Bremsbeläge ausgeübt. Wenn hingegen der Membranteil 16 entlüftet wird, werden die Bremsbeläge wieder gelöst - sofern die Feststellbremse nicht aktiviert ist. Der Membranteil 16 ist hierzu über eine Druckluftleitung 20 mit weiteren Komponenten eines elektronischen Bremssystems verbunden.

Ein der Feststellbremse zugeordneter elektropneumatische Feststellbremsmodulator weist eine Steuereinheit 22 auf. Ein die Betriebsbremse steuerndes elektronische Bremssystem weist seinerseits eine weitere elektronische Steuereinheit 24 auf. Bei einer alternativen Ausführungsform sind jedoch beide Steuereinheiten zu einer gemeinsamen Einheit verschmolzen. Eine in Fig. 1 dargestellte elektrische bzw. elektronische Steuerungseinrichtung 26 umfasst die beiden Steuereinheiten 22, 24. Diese Steuerungseinrichtung 26 kann jedoch sowohl in einem Gehäuse als auch in mehreren Baugruppen in unterschiedlichen Gehäusen ausgebildet sein.

Die Druckluftleitung 18 sowie die Druckluftleitung 20 sind jeweils über eine oder mehrere Ventileinrichtungen 28, 30 be- und entlüftbar. Die Ventileinrichtung 28 ist vorzugsweise in einem elektropneumatischen Modulator der Feststellbremse angeordnet. Die Ventileinrichtung 30 ist vorzugsweise in einem elektropneumatischen Modulator des elektronischen Bremssystems angeordnet. Von diesen Ventileinrichtungen ist in Fig. 1 lediglich schematisch ein einziges Ventil für den Federspeicherteil 14 sowie für den Membranteil 16 dargestellt.

Die Steuerungseinrichtung 26 weist ferner einen Zeitgeber 32 auf, der entweder innerhalb der Steuereinheit 22 und/oder der Steuereinheit 24 oder separat davon innerhalb der Steuerungseinrichtung 26 untergebracht ist.

Die Steuerungseinrichtung 26 ist ferner mit einem Überwachungssensor 34 versehen, mittels dessen überwacht werden kann, ob ein Fahrer einen Fuß in Kontakt mit einem Pedal, z.B. dem Bremspedal, dem Kupplungspedal und/oder dem Gaspedal hält oder nicht. Der Überwachungssensor 34 kann bspw. als ein am Pedal angeordneter Sensor ausgebildet sein. Zusätzlich oder alternativ kann dieser Überwachungssensor 34 jedoch auch einen Drucksensor umfassen zum Messen eines von einer Bremspedalbetätigung erzeugbaren Druckes in einer Leitung des Betriebsbremskreises. Zusätzlich oder alternativ kann der Überwachungssensor 34 jedoch auch als elektrischer Sensor ausgebildet sein, welcher eine mechanische Belastung des Pedals erfasst. Mittels des Überwachungssensors 34 kann somit festgestellt werden, ob der Fahrer seinen Fuß in Kontakt mit dem Pedal hält oder nicht.

Zusätzlich oder alternativ kann zu einer Überwachung des oder der Pedale auch eine Überwachung eines manuell zu betätigenden Betätigungsorgans, bspw. eines Tasters stattfinden.

Ferner ist die Steuerungseinrichtung 26 mit einem Betätigungselement 36 verbunden, welches in der Fahrerkabine angeordnet ist. Der Fahrer kann durch Betätigen des Betätigungselements 36 eine Rollbremsfunktion der Bremseinrichtung aktivieren, welche die Aufgabe hat, das Fahrzeug an einem unbeabsichtigten Wegrollen zu hindern, wenn das Fahrzeug steht. Das Fahrzeug ist zu diesem Zweck mit einem Bewegungssensor 38 ausgerüstet. Hierbei kann es sich um einen Radgeschwindigkeitssensor handeln, welcher die Drehzahl eines Rades misst. Bspw. handelt es sich hierbei um einen induktiven Radsensor, welcher ein Polrad mit einer Vielzahl von Zähnen, bspw. 80 Zähnen, abtastet und auf diese Weise die Drehgeschwindigkeit des Rades und somit die Fahrzeuggeschwindigkeit ermittelt. Bei sehr niedrigen Fahrzeuggeschwindigkeiten erweisen sich derartige Sensoren, je nach Auslegung, jedoch als problematisch, so dass auf andere Sensorsysteme zurückgegriffen wird. Insbesondere werden solche Sensoren eingesetzt, welche nicht direkt das Messsignal ausgeben, sondern zunächst aufbereiten. Hierzu ist der jeweilige Sensor mit einer Messsignalverarbeitungseinrichtung zur Aufbereitung seines Messsignals integriert. Bspw. wird bei der Messsignalaufbereitung ein pulsweitenmoduliertes Signal erzeugt, welches dann an die Steuerungseinrichtung 26 gesendet wird. Derartige Sensoren sind dadurch ausgezeichnet, dass sie auch sehr langsame Fahrzeuggeschwindigkeiten, bspw. unter 1 Km/h erfassen können.

Ferner können mehrere Sensoren, d.h. insbesondere sowohl die o.g. Radgeschwindigkeitssensoren mit Polrad als auch die o.g. Sensoren mit einer Messsignalaufbereitung zum Ermitteln einer Fahrzeugbewegung jeweils Signale an die Steuerungseinrichtung 26 senden, welche dann auf ihre Plausibilität hin miteinander verknüpft werden, um einen möglichst genauen Wert über eine etwaige Fahrzeugbewegung zu erhalten. Insbesondere können somit auch sehr langsame Fahrzeugbewegungen von dem bzw. den Bewegungssensoren 38 erfasst werden, mithin auch Geschwindigkeiten von unter 1 km/h.

Die Steuerungseinrichtung 26 ist bei einer besonderen Ausführung ferner mit einem oder mehreren Detektoren 40 zum Erkennen von Systemausfällen verknüpft. Mittels des bzw. der Detektoren 40 kann festgestellt werden, ob ein oder mehrere Fehler in der Bremseinrichtung und ggf. ihren Komponenten vorliegen. Bspw. kann einer der Detektoren 40 ein Drucksensor sein, welcher einen etwaigen unbeabsichtigten Druckabfall bspw. in einem Druckluftvorratsbehälter erfassen kann. Ferner kann einer der Detektoren 40 ein Spannungsdetektor sein, der auf einen kritischen Zustand einer elektrischen Energiequelle schließen kann.

Mittels dieser Detektoren 40 zum Detektieren von Systemausfällen kann die Steuerungseinrichtung 26 die nachfolgend näher erläuterten Verfahren zur Absicherung der Rollsperre einleiten. Entsprechendes gilt für die von den o.g. Komponenten, Überwachungssensor 34 und Bewegungssensor 38, abgegebenen Signalen.

Die Steuerungseinrichtung ist ferner mit einer akustischen Signaleinrichtung 42, bspw. einer Hupe, oder einer optischen Signaleinrichtung 44, bspw. einem Blinklicht, verbunden.

Die Steuerungseinrichtung 26 kann diese Signaleinrichtungen 42, 44 betätigen, so dass bspw. die akustische Signaleinrichtung einen akustischen Signalton bzw. die optische Signaleinrichtung ein optisches Signal ausgibt.

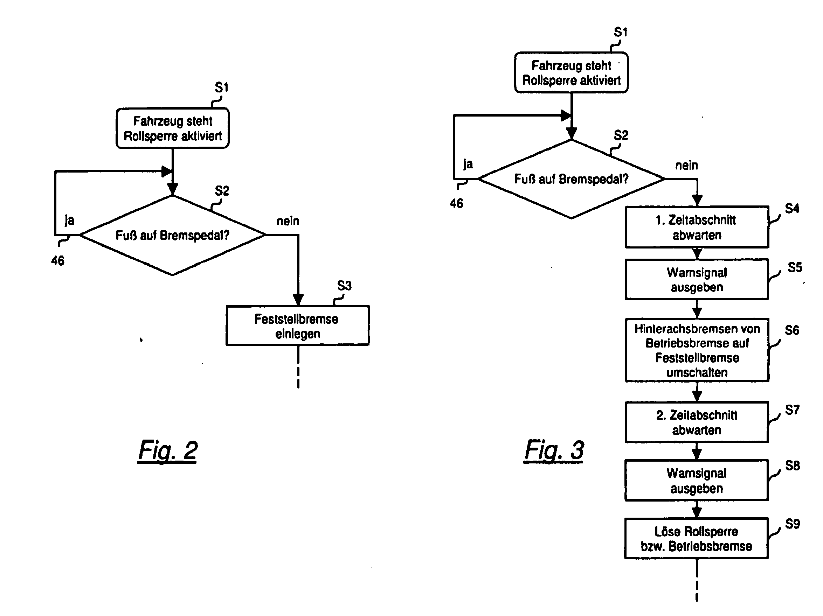

Fig. 2 zeigt in Form eines Flussdiagramms schematisch den Ablauf eines erfindungsgemäßen Verfahrens. Im Schritt S1 wird zunächst die Rollbremsfunktion durch Betätigung des Betätigungselements 36 während eines (von dem Bewegungssensor 38 detektierbaren) Fahrzeugstillstandes aktiviert. In einem Schritt S2 erfolgt mittels des Überwachungssensors 34 eine Überwachung dahingehend, ob der Fahrer seinen Fuß auf dem Bremspedal hält oder nicht. Wenn der Fahrer seinen Fuß nicht auf dem Bremspedal hält, führt das Verfahren weiter zum Schritt S3, in dem dann die Feststellbremse unmittelbar in Reaktion auf den sich nicht mehr auf dem Bremspedal befindenden Fuß eingelegt wird.

Sofern jedoch im Schritt S2 festgestellt wird, dass der Fahrer seinen Fuß weiterhin auf dem Bremspedal hält, erfolgt über eine Verzweigung 46 eine erneute Überprüfung des Bremspedals gemäß Schritt S2.

Durch diese Art der Steuerung der Bremseinrichtung kann ein sehr hoher Grad an Absicherung der Rollbremsfunktion erreicht werden, da immer dann, wenn der Fahrer nicht mehr die erforderliche Aufmerksamkeit auf ein etwaiges Wegrollen des Fahrzeuges richtet, automatisch von der Steuerungseinrichtung 26 die Feststellbremse einlegt wird.

Fig. 3 zeigt ein weiteres Ausführungsbeispiel, das in Teilen mit dem in Fig. 2 gezeigten Ausführungsbeispiel übereinstimmt, insbesondere was die Schritte S1, S2 und die Verzweigung 46 anbelangt. Sofern jedoch bei diesem Ausführungsbeispiel im Schritt S2 festgestellt wird, dass der Fahrer seinen Fuß nicht auf dem Bremspedal hält, erfolgt eine Verzweigung zum Schritt S4. In Schritt S4 wird der Zeitgeber 32 angestoßen, um sodann einen ersten Zeitabschnitt abzuwarten. Sobald der Zeitgeber 32 abgelaufen ist, ertönt in einem Schritt S5 ein Warnsignal. Anschließend wird im Schritt S6 die Betriebsbremse an einer ersten Gruppe von Rädern auf die Feststellbremse umgeschaltet. D.h. der Membranteil 16 wird ebenso wie der Federspeicherteil 14 entlüftet, wodurch einerseits die Betriebsbremse an diesen Rädern gelöst und andererseits die Speicherfeder wirksam und die Feststellbremse einlegt wird. Vorteilhafterweise handelt es sich bei dieser ersten Gruppe von Rädern um die Räder der mit Federspeicherbremszylindern versehenen Hinterachse(n).

Das Verfahren gelangt dann zum Schritt S7, in dem dann erneut der Zeitgeber 32 angestoßen wird, um einen zweiten Zeitabschnitt abzuwarten. Nach Ablauf dieses zweiten Zeitabschnittes wird im Schritt S8 ein Warnsignal ausgegeben und im Schritt S9 die Rollsperre deaktiviert, indem die Betriebsbremse gelöst wird. Dies geschieht durch Entlüften des Membranteils 16.

Wenn in diesem Zustand das Fahrzeug bspw. an einer großen Steigung durch die nunmehr nur noch wirkende Feststellbremse nicht mehr gehalten werden kann, kann der Fahrer in üblicher Weise die Bremskraft durch Betätigung der Betriebsbremse erhöhen.

Zwar wurde vorstehend die Ausgabe von Warnsignalen in den Schritten S5 und S8 genannt. Bei einem alternativen Ausführungsbeispiel entfallen jedoch diese Schritte und es werden keine entsprechenden Warnsignale ausgegeben.

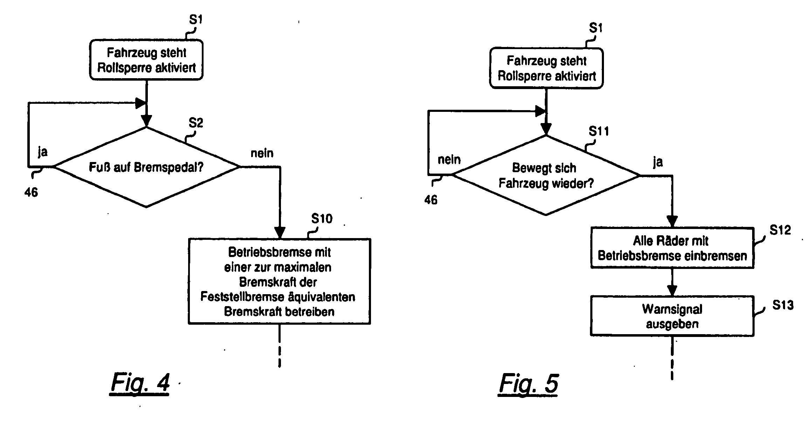

Fig. 4 zeigt ein weiteres Ausführungsbeispiel eines erfindungsgemäßen Verfahrens. Wie in den Ausführungsbeispielen gemäß Fig. 2 und 3 stimmt dieses in Bezug auf die Schritte S1, S2 und die Verzweigung 46 überein.

Falls jedoch im Schritt S2 festgestellt wird, dass der Fahrer seinen Fuß nicht mehr auf dem Bremspedal hält, erfolgt eine Verzweigung zum Schritt S10. In Schritt S10 sorgt die Steuerungseinrichtung 26 dafür, dass in die Druckluftleitung 20 ein derartiger Druck eingesteuert wird, dass die von dem Federspeicherteil 14 maximal erzeugbare Bremskraft vom Membranteil 16 auf die Bremse des Rades 10 ausgeübt wird. Der Federspeicherteil 14 bleibt dabei belüftet, so dass die Feststellbremse nicht eingelegt ist.

Durch diesen Zustand kann der Fahrer feststellen, ob das Fahrzeug überhaupt über die Feststellbremse gesichert werden kann. Möglicherweise reicht nämlich die Bremskraft der Feststellbremse, bspw. bei zu starkem Gefälle nicht aus. In diesem Fall kann der Fahrer das Fahrzeug wieder durch Betätigen der Betriebsbremse sicher halten.

Im Zusammenhang mit den vorstehend erläuterten Flussdiagrammen zu den Fig. 2 bis 4 wurde jeweils im Schritt S2 eine Überwachung des Bremspedals im Hinblick auf einen Kontakt mit dem Fuß des Fahrers beschrieben. Anstelle des Bremspedals kann jedoch auch ein anderes Pedal verwendet werden, bspw. das Gaspedal oder das Kupplungspedal. Es besteht bei einem alternativen Ausführungsbeispiel auch die Möglichkeit, dass ein weiteres, speziell zu diesem Zweck vorgesehenes Pedal überwacht wird. Schließlich kann auch eine Kombination mehrerer Pedale überwacht werden.

Darüber hinaus sieht ein alternatives Ausführungsbeispiel vor, ein manuell zu betätigendes Betätigungsorgan zu überwachen. Bspw. ist zu diesem Zweck ein Taster oder ein Berührungssensor vorgesehen. Bei einem besonderen Ausführungsbeispiel erfolgt eine Überwachung einer Kombination mehrerer Betätigungsorgane.

Fig. 5 zeigt ein weiteres Ausführungsbeispiel. Der Schritt S1 entspricht wieder dem in den vorstehend genannten Beispielen erläuterten Schritt S1, d.h. die Rollsperre ist aktiviert und das Fahrzeug steht. In dem sich anschließenden Schritt S11 erfolgt eine Überwachung dahingehend, ob sich das angehaltene Fahrzeug wieder in Bewegung setzt. Wenn sich das Fahrzeug nicht bewegt, erfolgt eine Verzweigung 46 zurück zum Schritt S11. Falls sich hingegen das Fahrzeug bewegt, wobei eine derartige Bewegung mittels des oder der Bewegungssensoren 38 festgestellt wird, erfolgt eine Verzweigung zum Schritt S12. Im Schritt S12 werden dann automatisch durch die Steuerungseinrichtung 26 alle Räder des Fahrzeuges mittels der Betriebsbremse eingebremst, soweit die Räder an die Betriebsbremse angeschlossen sind.

In einem optionalen Schritt S13 erfolgt dann die Ausgabe eines Warnsignals.

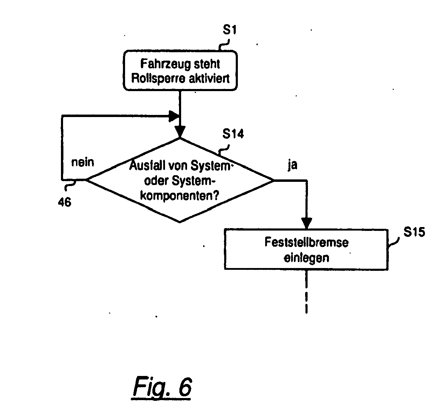

Fig. 6 zeigt ein weiteres Ausführungsbeispiel gemäß der Erfindung. Schritt S1 entspricht wieder dem vorstehend erläuterten Schritt S1, d.h. die Rollsperre ist aktiviert und das Fahrzeug steht.

In einem sich anschließenden Schritt S14 wird dann geprüft, ob ein Ausfall im elektronischen Bremssystem oder in einer seiner Komponenten vorliegt. Ist dies nicht der Fall, wird das Verfahren über die Verzweigung 46 zurück zum Schritt S14 geführt. Falls jedoch ein Ausfall des elektronischen Bremssystems oder einer seiner Komponenten mittels des bzw. der Sensoren 40 detektiert wird, werden im Schritt S15 die Feststellbremsen eingelegt.

Bei einem alternativen Ausführungsbeispiel werden Systemausfallsensoren 40 nicht benötigt. Vielmehr erfolgt die Einlegung der Feststellbremse selbsttätig, wenn bestimmte elektrische Bedingungen, z.B. bei einem Ausfall der elektrischen Spannungsversorgung, und/oder bestimmte pneumatische Bedingungen, z.B. bei Ausfall der pneumatischen Druckversorgung, vorliegen. Ein derartiges selbsttätiges Einlegen der Feststellbremse wird vorteilhafterweise mittels entsprechend ausgebildeter Magnetventile erreicht.

Bei allen Ausführungsbeispielen wird vorteilhafterweise bei einer automatisch, insbesondere von der Steuerungseinrichtung eingeleiteten Zustandsänderung der Betriebsbremse und/oder der Feststellbremse ein Warnsignal ausgegeben, das bspw. als akustisches und/oder optisches Warnsignal mittels einer Hupe und/oder eines Warnblinklichts ausgegeben werden kann.

### Bezugszeichenliste

- 10: Räder
- 12: Federspeicherbremszylinder
- 14: Federspeicherteil
- 16: Membranteil
- 18: Druckluftleitung
- 20: Druckluftleitung
- 22: EPH-Steuereinheit
- 24: EBS-Steuereinheit
- 26: Steuerungseinrichtung
- 28: Ventileinrichtung
- 30: Ventileinrichtung
- 32: Zeitgeber
- 34: Überwachungssensor
- 36: Betätigungselement
- 38: Bewegungssensor
- 40: Detektor zum Detektieren von Systemausfällen
- 42: akustische Signaleinrichtung
- 44: optische Signaleinrichtung
- 46: Verzweigung
- 48: Verzweigung
- 50: Verzweigung

## Patentansprüche

1. Verfahren zum Betreiben einer Bremseinrichtung eines Kraftfahrzeuges mit einer Betriebsbremse (16) und einer Feststellbremse (14), wobei bei Aktivierung einer Rollbremsfunktion und Erreichen eines Fahrzeugstillstandes eine Überwachung (S2) eines Betätigungsorgans im Hinblick darauf erfolgt, ob ein Fahrer Kontakt mit dem Betätigungsorgan hält, **dadurch gekennzeichnet, dass**, falls die Überwachung (S2) ergibt, dass der Fahrer keinen Kontakt mit dem Betätigungsorgan hat, mittels einer elektronischen Steuerungseinrichtung (26) zur Steuerung der Betriebsbremse (16) und der Feststellbremse (14)
a) die Feststellbremse (14) eingelegt wird (S6), bevor die Betriebsbremse vollständig gelöst wird (S9), wobei nach einem ersten Zeitabschnitt (S4) die Betriebsbremse nur an einer ersten Gruppe von Rädern gelöst wird (S6), insbesondere nur an den Rädern (10), an denen Federspeicherbremszylinder (12) vorgesehen sind, und an dieser Gruppe von Rädern (10) gleichzeitig die Feststellbremse (14) eingelegt wird, und nach einem zweiten Zeitabschnitt (S7) die Betriebsbremse (16) auch an allen weiteren Rädern gelöst wird,
oder
b) mit der Betriebsbremse (16) ein Bremsdruck ausgesteuert wird (S10), welcher dem maximalen, von der Feststellbremse (14) erzeugbaren Bremsdruck entspricht.

2. Verfahren nach Anspruch 1, **dadurch gekennzeichnet, dass** unmittelbar vor Ablauf des ersten und/oder zweiten Zeitabschnitts ein Warnsignal (S5, S8) ausgegeben wird.

3. Verfahren nach einem der Ansprüche 1 bis 2, **dadurch gekennzeichnet, dass** bei Aktivierung einer Rollbremsfunktion (S1) und Erreichen eines Fahrzeugstillstandes eine Überwachung (S11) des Fahrzeuges im Hinblick auf eine etwaige Fahrzeugbewegung erfolgt und falls die Überwachung ergibt, dass sich das Fahrzeug in Bewegung gesetzt hat, mittels einer elektronischen Steuerungseinrichtung (26) über die Betriebsbremse (16) alle an die Betriebsbremse (16) angeschlossenen Räder des Fahrzeuges eingebremst werden (S12).

4. Verfahren nach Anspruch 3, **dadurch gekennzeichnet, dass** ein Warnsignal (S13) ausgegeben wird, wenn die Überwachung (S11) ergibt, dass sich das Fahrzeug in Bewegung gesetzt hat.

5. Verfahren nach Anspruch 2, 3 oder 4, **dadurch gekennzeichnet, dass** das Warnsignal (S5; S8; S13) ein akustisches Signal, insbesondere ein mittels einer Hupe des Fahrzeugs ausgegebenes Signal, und/oder ein optisches Signal, insbesondere ein mittels der Fahrzeugbeleuchtung ausgegebenes Licht- oder Blinklichtsignal ist.

6. Verfahren nach einem der vorhergehenden Ansprüche, **dadurch gekennzeichnet, dass** eine Überwachung (S14) der Bremseinrichtung und ggf. ihrer Komponenten erfolgt und falls die Überwachung (S14) ergibt, dass ein Fehler in der Bremseinrichtung und/oder ggf. in ihren Komponenten, insbesondere ein Ausfall eines Bremskreises und/oder einer elektrischen Energieversorgung, vorliegt, die Feststellbremse (14) eingelegt wird.

7. Einrichtung zum Betreiben einer Bremseinrichtung eines Kraftfahrzeuges mit einer Betriebsbremse (16) und einer Feststellbremse (14), einem Betätigungselement (36) zum Aktivieren einer Rollbremsfunktion und Überwachungsmitteln (34) zur Überwachung eines Betätigungsorgans im Hinblick darauf, ob ein Fahrer Kontakt mit dem Betätigungsorgan hält, **gekennzeichnet durch** eine derart ausgelegte elektronische Steuerungseinrichtung (26) zur Steuerung der Betriebsbremse (16) und der Feststellbremse (14), dass, falls die Überwachung ergibt, dass der Fahrer keinen Kontakt mit dem Betätigungsorgan hat,
a) die Feststellbremse (14) einlegbar ist, bevor die Betriebsbremse vollständig gelöst wird (S9), wobei nach einem ersten Zeitabschnitt (S4) die Betriebsbremse nur an einer ersten Gruppe von Rädern gelöst wird (S6), insbesondere nur an den Rädern (10), an denen Federspeicherbremszylinder (12) vorgesehen sind, und an dieser Gruppe von Rädern (10) gleichzeitig die Feststellbremse (14) eingelegt wird, und nach einem zweiten Zeitabschnitt (S7) die Betriebsbremse (16) auch an allen weiteren Rädern gelöst wird,
oder
b) mit der Betriebsbremse (16) ein Bremsdruck ausgesteuert wird, welcher dem maximalen von der Feststellbremse (14) erzeugbaren Bremsdruck entspricht.

8. Einrichtung nach Anspruch 7, **dadurch gekennzeichnet, dass** die Steuerungseinrichtung zur Durchführung eines Verfahrens nach einem der Ansprüche 1 bis 2 sowie 5 und 6 ausgelegt ist.

9. Einrichtung nach Anspruch 7 oder 8, **dadurch gekennzeichnet, dass** das Betätigungsorgan ein im Führerhaus angeordnetes Pedal, insbesondere ein Bremspedal, Kupplungspedal und/oder Gaspedal, ist.

10. Einrichtung nach einem der Ansprüche 7 bis 9, **dadurch gekennzeichnet, dass** das Betätigungsorgan ein im Führerhaus angeordnetes manuelles Betätigungsorgan, insbesondere ein Taster, ist.

11. Einrichtung nach einem der Ansprüche 7 bis 10, **dadurch gekennzeichnet, dass** die Überwachungsmittel (34) einen am Betätigungsorgan angeordneten Sensor aufweisen.

12. Einrichtung nach einem der Ansprüche 7 bis 11, **dadurch gekennzeichnet, dass** die Überwachungsmittel (34) einen Drucksensor aufweisen zum Messen eines von einer Bremspedalbetätigung erzeugbaren Druckes in einer Leitung eines Betriebsbremskreises.

13. Einrichtung nach einem der Ansprüche 7 bis 12, **dadurch gekennzeichnet, dass** die Überwachungsmittel (34) einen elektrischen Sensor aufweisen zum Messen einer vom Fahrer auf das Bremspedal ausübbaren Kraft.

14. Einrichtung nach einem der Ansprüche 7 bis 13 **gekennzeichnet durch** Überwachungsmittel (38) zur Überwachung des Fahrzeuges im Hinblick auf eine etwaige Fahrzeugbewegung und eine derart ausgelegte elektronische Steuerungseinrichtung (26) zur Steuerung der Betriebsbremse (16) und der Feststellbremse (14), dass, falls die Überwachung ergibt, dass sich das Fahrzeug in Bewegung setzt, über die Betriebsbremse (16) alle an die Betriebsbremse (16) angeschlossenen Räder des Fahrzeuges einbremsbar sind.

15. Einrichtung nach Anspruch 14, **dadurch gekennzeichnet, dass** die Steuerungseinrichtung zur Durchführung eines Verfahrens nach einem der Ansprüche 3 bis 6 ausgelegt ist.

16. Einrichtung nach Anspruch 14 oder 15, **gekennzeichnet durch** einen Bewegungssensor (38) zur Erfassung einer Fahrzeugbewegung.

17. Einrichtung nach Anspruch 16, **dadurch gekennzeichnet, dass** der Bewegungssensor (38) ein Radgeschwindigkeitssensor ist.

18. Einrichtung nach Anspruch 16, **dadurch gekennzeichnet, dass** der Bewegungssensor (38) ein Sensor mit einer Messsignalverarbeitungseinrichtung zur Aufbereitung eines gemessenen Messsignals ist.

19. Einrichtung nach einem der Ansprüche 14 bis 18, **gekennzeichnet durch** die Merkmale einer Einrichtung nach einem der Ansprüche 7 bis 13.

## Claims

1. Method for operating a braking device of a motor vehicle with a service brake (16) and a parking brake (14), wherein when a roll braking function is activated and the vehicle comes to a standstill, monitoring (S2) of an actuation organ with regard to whether a driver maintains contact with the actuation organ is carried out, **characterized in that** in the event that the monitoring (S2) establishes that the driver has no contact with the actuation organ, then by means of an electronic control device (26) for the control of the service brake (16) and the parking brake (14),
a) the parking brake (14) is engaged (S6) before the service brake is completely released (S9), wherein after a first period (S4) the service brake is released only on a first group of wheels (S6), especially only on the wheels (10) on which spring- brake cylinders (12) are provided, and the parking brake (14) is simultaneously engaged on this group of wheels (10), and after a second period (S7) the service brake (16) is also released on all other wheels,
or
b) a brake pressure which corresponds to the maximum brake pressure that can be generated by the parking brake (14) is modulated (S10) with the service brake (16).

2. Method according to Claim 1, **characterized in that** a warning signal (S5, S8) is output immediately before expiration of the first and/or second period.

3. Method according to any one of Claims 1 to 2, **characterized in** when a roll braking function (S1) is activated and the vehicle comes to a standstill, monitoring (S11) of the vehicle with regard to a possible vehicle movement takes place and in the event that the monitoring establishes that the vehicle has started to move, all wheels of the vehicle connected to the service brake (16) are braked (S12) via the service brake (16) by means of an electronic control device (26).

4. Method according to Claim 3, **characterized in that** a warning signal (S13) is output when the monitoring (S11) establishes that the vehicle has started to move.

5. Method according to Claim 2, 3 or 4, **characterized in that** the warning signal (S5; S8; S13) is an acoustic signal, especially a signal output by means of a horn of the vehicle, and/or a visual signal, especially a light or flashing light signal output by means of the vehicle lighting.

6. Method according to any one of the preceding claims, **characterized in that** monitoring (S14) of the braking device and if applicable its components takes place and in the event that the monitoring (S14) establishes that there is a fault in the braking device and/or if applicable in its components, especially a failure of a brake circuit and/or an electric energy supply, the parking brake (14) is engaged.

7. Device for operating a braking device of a motor vehicle with a service brake (16) and a parking brake (14), an actuation element (36) for actuating a roll braking function and monitoring means (34) for monitoring an actuation organ with regard to whether a driver maintains contact with the actuation organ, **characterized by** an electronic control device (26) for the control of the service brake (16) and the parking brake (14), which electronic control device is designed in such a manner that in the event that the monitoring establishes that the driver has no contact with the actuation organ,
a) the parking brake (14) can be engaged (S6) before the service brake is completely released (S9), wherein after a first period (S4) the service brake is released only on a first group of wheels (S6), especially only on the wheels (10) on which spring- brake cylinders (12) are provided, and the parking brake (14) is simultaneously engaged on this group of wheels (10), and after a second period (S7) the service brake (16) is also released on all other wheels,
or
b) a brake pressure which corresponds to the maximum brake pressure that can be generated by the parking brake (14) is modulated with the service brake (16).

8. Device according to Claim 7, **characterized in that** the control device is designed for carrying out a method according to any one of the Claims 1 to 2 and also 5 and 6.

9. Device according to Claim 7 or 8, **characterized in that** the actuation organ is a pedal arranged in the driver's cab, especially a brake pedal, clutch pedal and/or accelerator pedal.

10. Device according to any one of the Claims 7 to 9, **characterized in that** the actuation organ is a manual actuation organ arranged in the driver's cab, especially a push button.

11. Device according to any one of the Claims 7 to 10, **characterized in that** the monitoring means (34) comprise a sensor arranged on the actuation organ.

12. Device according to any one of the Claims 7 to 11, **characterized in that** the monitoring means (34) comprise a pressure sensor for measuring a pressure, which can be generated by a brake pedal actuation, in a line of a service brake circuit.

13. Device according to any one of the Claims 7 to 12, **characterized in that** the monitoring means (34) comprise an electric sensor for measuring a force that can be exerted on the brake pedal by the driver.

14. Device according to any one of Claims 7 to 13, **characterized by** monitoring means (34) for monitoring the vehicle with regard to a possible vehicle movement and an electronic control device (26) for controlling the service brake (16) and the parking brake (14), which electronic control device is designed in such a manner that in the event that the monitoring establishes that the vehicle is starting to move, all wheels of the vehicle connected to the service brake (16) can be braked via the service brake (16).

15. Device according to Claim 14, **characterized in that** the control device is designed for carrying out a method according to any one of the Claims 3 to 6.

16. Device according to Claim 14 or 15, **characterized by** a movement sensor (38) for sensing a vehicle movement.

17. Device according to Claim 16, **characterized in that** the movement sensor (38) is a wheel speed sensor.

18. Device according to Claim 16, **characterized in that** the movement sensor (38) is a sensor with a measurement signal processing device for processing a measured measurement signal.

19. Device according to any one of the Claims 14 to 18, **characterized by** the features of a device according to any one of the Claims 7 to 13.

## Revendications

1. Procédé de fonctionnement d'un dispositif de freinage d'un véhicule automobile comprenant un frein de service (16) et un frein de stationnement (14), une surveillance (S2) d'un organe d'actionnement ayant lieu lors de l'activation d'une fonction de frein de roulement et l'arrivée à une immobilisation du véhicule, avec pour objectif de vérifier si un conducteur maintient le contact avec l'organe d'actionnement, **caractérisé en ce que** dans le cas où il résulte de la surveillance (S2) que le conducteur n'a pas de contact avec l'organe d'actionnement, au moyen d'un dispositif de commande (26) électronique destiné à commander le frein de service (16) et le frein de stationnement (14),
a) le frein de stationnement (14) est engagé (S6) avant que le frein de service ne soit totalement relâché (S9) après un premier intervalle de temps (S4), le frein de service n'étant relâché (S6) qu'au niveau d'un premier groupe de roues, notamment seulement au niveau des roues (10) sur lesquelles sont prévus des cylindres de frein à accumulation à ressort (12) et le frein d'immobilisation (14) étant simultanément appliqué à ce groupe de roues (10), puis le frein de service (16) étant également relâché au niveau de toutes les autres roues après un deuxième intervalle de temps (S7),
ou
b) une pression de freinage est appliquée (S10) avec le frein de service (16), laquelle correspond à la pression de freinage maximale pouvant être produite par le frein de stationnement (14).

2. Procédé selon la revendication 1, **caractérisé en ce qu'**un signal d'alerte (S5, S8) est délivré immédiatement avant l'écoulement du premier et/ou du deuxième intervalle de temps.

3. Procédé selon l'une des revendications 1 à 2, **caractérisé en ce qu'**une surveillance (S11) du véhicule visant à détecter un éventuel mouvement du véhicule a lieu lors de l'activation d'une fonction de frein de roulement (S1) et l'arrivée à une immobilisation du véhicule, et dans le cas où il résulte de la surveillance que le véhicule s'est mis en mouvement, toutes les roues du véhicule qui sont reliées au frein de service (16) sont freinées (S12) par le biais du frein de service (16) au moyen d'un dispositif de commande (26) électronique.

4. Procédé selon la revendication 3, **caractérisé en ce qu'**un signal d'alerte (S13) est délivré lorsqu'il résulte de la surveillance (S11) que le véhicule s'est mis en mouvement.

5. Procédé selon la revendication 2, 3 ou 4, **caractérisé en ce que** le signal d'alerte (S5 ; S8 ; S13) est un signal sonore, notamment un signal délivré par le biais du klaxon du véhicule, et/ou un signal visuel, notamment un signal lumineux ou clignotant délivré au moyen de l'éclairage du véhicule.

6. Procédé selon l'une des revendications précédentes, **caractérisé en ce qu'**une surveillance (S14) du dispositif de freinage et éventuellement de ses composants a lieu et dans le cas où il résulte de la surveillance (S14) qu'un défaut existe dans le dispositif de freinage et/ou éventuellement dans ses composants, notamment une panne d'un circuit de freinage et/ou d'une alimentation en énergie électrique, le frein d'immobilisation (14) est engagé.

7. Dispositif pour faire fonctionner un dispositif de freinage d'un véhicule automobile, comprenant un frein de service (16) et un frein de stationnement (14), un élément d'actionnement (36) pour activer une fonction de frein de roulement et des moyens de surveillance (34) pour surveiller un organe d'actionnement avec pour objectif de vérifier si un conducteur maintient le contact avec l'organe d'actionnement, **caractérisé par** un dispositif de commande (26) électronique destiné à commander le frein de service (16) et le frein de stationnement (14) conçu de telle sorte que, dans le cas où il résulte de la surveillance que le conducteur n'a pas de contact avec l'organe d'actionnement,
a) le frein de stationnement (14) peut être engagé avant que le frein de service ne soit totalement relâché (S9) après un premier intervalle de temps (S4), le frein de service n'étant relâché (S6) qu'au niveau d'un premier groupe de roues, notamment seulement au niveau des roues (10) sur lesquelles sont prévus des cylindres de frein à accumulation à ressort (12) et le frein d'immobilisation (14) étant simultanément appliqué à ce groupe de roues (10), puis le frein de service (16) étant également relâché au niveau de toutes les autres roues après un deuxième intervalle de temps (S7),
ou
b) une pression de freinage est appliquée avec le frein de service (16), laquelle correspond à la pression de freinage maximale pouvant être produite par le frein de stationnement (14).

8. Dispositif selon la revendication 7, **caractérisé en ce que** le dispositif de commande est conçu pour mettre en oeuvre un procédé selon l'une des revendications 1 à 2 ainsi que 5 et 6.

9. Dispositif selon la revendication 7 ou 8, **caractérisé en ce que** l'organe d'actionnement est une pédale installée dans la cabine du conducteur, notamment une pédale de frein, une pédale d'embrayage et/ou une pédale d'accélérateur.

10. Dispositif selon l'une des revendications 7 à 9, **caractérisé en ce que** l'organe d'actionnement est un organe d'actionnement manuel installé dans la cabine du conducteur, notamment une touche.

11. Dispositif selon l'une des revendications 7 à 10, **caractérisé en ce que** les moyens de surveillance (34) présentent un capteur monté sur l'organe d'actionnement.

12. Dispositif selon l'une des revendications 7 à 11, **caractérisé en ce que** les moyens de surveillance (34) présentent un capteur de pression pour mesurer une pression qui peut être générée par un actionnement de la pédale de frein dans une conduite d'un circuit de frein de service.

13. Dispositif selon l'une des revendications 7 à 12, **caractérisé en ce que** les moyens de surveillance (34) présentent un capteur électrique pour mesurer une force qui peut être exercée par le conducteur sur la pédale de frein.

14. Dispositif selon l'une des revendications 7 à 13, **caractérisé par** des moyens de surveillance (34) pour surveiller le véhicule en vue d'un éventuel mouvement du véhicule et un dispositif de commande (26) électronique destiné à commander le frein de service (16) et le frein de stationnement (14) conçu de telle sorte que, dans le cas où il résulte de la surveillance que le véhicule se met en mouvement, toutes les roues du véhicule qui sont reliées au frein de service (16) peuvent être freinées par le biais du frein de service (16).

15. Dispositif selon la revendication 14, **caractérisé en ce que** le dispositif de commande est conçu pour mettre en oeuvre un procédé selon l'une des revendications 3 à 6.

16. Dispositif selon la revendication 14 ou 15, **caractérisé par** un capteur de mouvement (38) pour détecter un mouvement du véhicule.

17. Dispositif selon la revendication 16, **caractérisé en ce que** le capteur de mouvement (38) est un capteur de vitesse de roue.

18. Dispositif selon la revendication 16, **caractérisé en ce que** le capteur de mouvement (38) est un capteur muni d'un dispositif de traitement du signal de mesure pour conditionner un signal de mesure mesuré.

19. Dispositif selon l'une des revendications 14 à 18, **caractérisé par** les caractéristiques d'un dispositif selon l'une des revendications 7 à 13.
